# EUROPEAN PATENT APPLICATION

(11) **EP 1 710 803 A2**
(43) Date of publication of application: **11.10.2006**
(21) Application number: 06251754.5
(22) Date of filing: 30.03.2006
(51) Int. Cl.: G11B 33/00

(54) **Recording and reproducing device**

(30) Priority: 31.03.2005 JP 2005100713
(71) Applicant: ORION ELECTRIC CO., Ltd., Takefu-City, Fukui 915-8555 (JP)
(72) Inventor: Funaki, Yoichi, I.P.D. Orion Electric Co. Ltd, Echizen-city Fukui 915-8555 (JP)
(74) Representative: Paget, Hugh Charles Edward

(57) **Abstract**

The present invention relates to a recording and reproducing device including a DVD unit, an HDD unit and a VCR unit and an MPEG board which processes both video/audio signals of the DVD unit and the HDD unit and provides a recording and reproducing device capable of efficiently radiating heat of an MPEG IC mounted on the MPEG board. A plane 20a of an MPEG IC 20 mounted on an MPEG board 12 is contacted with a contacting surface 4b of a bottom face 4a of a chassis 4 and heat generated in the MPEG IC 20 is directly radiated over the bottom face 4a of the chassis 4. Furthermore, a cooling fan 7 is placed at the back of a recording and reproducing device 1 and heat radiated over the bottom face 4a of the chassis 4 is cooled with a cooling wind.

## Description

### BACKGROUND OF THE INVENTION

### Field of the Invention

The present invention relates to a radiating structure to prevent an electronic part from overheating, and more particularly, to a recording and reproducing device provided with a DVD (Digital Versatile Disc) unit and an HDD (Hard Disk Drive) unit, and relates to a recording and reproducing device capable of efficiently radiating heat generated in an MPEG IC mounted on an MPEG board (circuit board mounted with an MPEG signal processing circuit and a digital circuit) which processes video/audio signals of the DVD unit and the HDD unit. An MPEG IC is an integrated circuit which processes video signals in one of the standard MPEG forms.

### Description of the Related Art

In recent years, a recording and reproducing device such as a DVD device and an HDD device which records/reproduces information on/from a disk is mounted with an MPEG board, on both sides of which an MPEG circuit which compresses or decompresses video/audio signals of the recording and reproducing device is formed, but it is a known fact that MPEG ICs making up the MPEG signal processing circuit and the digital circuit generate heat, producing a high temperature.

However, this MPEG board is generally attached below each DVD unit or HDD unit beforehand, and often mounted on a chassis together with these units. Heat generated on this MPEG IC is often cooled by also blowing onto the MPEG IC a cooling wind produced by a cooling fan provided for cooling heat generated in a power transformer which becomes another heat generating source inside the recording and reproducing device and the DVD unit and the HDD unit provided with a motor or the like or by releasing the heat to the outside.

Conventionally, on the other hand, in a heat radiating structure radiating heat generated in a semiconductor element such as a power transistor which makes up a switching power circuit, a method is adopted whereby a metal radiator with a plurality of radiating fins called "heat sinks" formed as a single piece to increase the surface area is attached to the semiconductor element and heat generated in the semiconductor element is released from the surfaces of the plurality of radiating fins of this radiator into the atmosphere.

Furthermore, for example, Japanese Patent Laid-Open Publication No. 7-336009 (Patent Document 1) describes a "radiating structure of a semiconductor element" or the like, which places a circuit board on the top surface of a chassis, provides a protrusion on the chassis, places a radiating spacer at an end of this protrusion, inserts it into a hole formed in the circuit board, solders it to a ground pattern of the circuit board with the radiating surface formed on the semiconductor element oriented face down and dissipates heat in the semiconductor element from the radiating surface onto the chassis through the radiating spacer and the protrusion. There is also a proposal of a method of radiating heat from the radiating surface to the chassis through the ground pattern and the circuit board.

According to the above described conventional technology, while the above described recording and reproducing device combines the VCR unit and the DVD unit or combines the DVD unit and the HDD unit, the recording and reproducing device is becoming smaller and slimmer, which causes heat to be accumulated more easily in the narrowed space, and in this way, how to efficiently dissipate heat of the MPEG IC in the recording and reproducing device is a problem to be solved. Furthermore, connections from the MPEG board to the DVD unit and the HDD unit and connections to a main board and power board or the like are performed after the MPEG board is attached below the DVD unit and the HDD unit and the MPEG board is then attached to the chassis together with these units, and therefore the DVD unit and the HDD unit attached above the MPEG board obstruct wiring of a plurality of wires connected from the MPEG board, making the wiring work complicated.

On the other hand, according to the method of attaching the radiator called a "heat sink" to the semiconductor element and radiating heat from this radiator, it is necessary to arrange a relatively large radiator in which a plurality of radiating fins are formed as a single piece around the semiconductor element, and therefore it is necessary to provide a space large enough to place the relatively large radiator in the vicinity of the semiconductor element and attach an expensive radiator made up of a plurality of radiating fins formed as a single piece.

Furthermore, according to the conventional technology of Patent Document 1, the chassis is at a distance from the radiating surface of the semiconductor element only corresponding to the thickness of the circuit board and the distance between the radiating surface and the chassis is small, and it has excellent radiation efficiency to the chassis. However, according to specifications whereby terminals of an electronic part are inserted into terminal holes formed in the circuit board and soldered on the back of the circuit board or electronic parts are mounted on both the front and back of the circuit board as in the case of a double-side mounting board member, there is a problem that the terminal soldered part and the mounted electronic part constitute obstacles, preventing the plane of the circuit board and the top surface of the chassis from directly contacting each other, deteriorating the radiation effect drastically. Furthermore, when this radiating structure is applied, it is necessary to provide a protrusion formed on the chassis, holes formed in the circuit board and a radiating spacer, and since these are formed as separate bodies, there is a problem of requiring complicated control over their respective relative positions and engagement dimensions or the like.

### SUMMARY OF THE INVENTION

The present invention has been implemented in view of the above described problems, and it is an object of the present invention to provide a recording and reproducing device provided with a DVD unit, an HDD unit and a VCR unit, which eliminates the need for a large space due to attachment of an expensive and relatively large radiator called a "heat sink" to a semiconductor element as shown in the conventional technology, and also eliminates the need for complicated control over relative positions and engagement dimensions of protrusions formed on the chassis, holes formed in the circuit board and radiating spacer as in the case of the conventional technology shown in above described Patent Document 1. Further, the invention provides for efficiently radiating heat generated in an MPEG IC mounted on a circuit board such as an MPEG board which processes video/audio signals for both the DVD unit and the HDD unit using a double-side mounting board member, on both sides of which circuit and soldering patterns are formed, and to which surface mount-type electronic parts having terminals are soldered with the terminals inserted into terminal holes, preventing malfunction which may be caused by heat accumulated in the MPEG IC producing a high temperature, extending the life of this MPEG IC part and improving long-term reliability of the above described recording and reproducing device on which the MPEG IC is mounted.

The recording and reproducing device according to a first aspect is a recording and reproducing device comprising a main board provided with a DVD unit and an HDD unit, which controls overall operation of the recording and reproducing device which constitutes the DVD unit and HDD unit and processes analog video/audio signals and an MPEG board which processes digital video/audio signals of the DVD unit and the HDD unit, wherein a plane of an MPEG IC mounted on the MPEG board is contacted with a bottom face of a chassis of the recording and reproducing device so as to radiate heat generated in the MPEG IC over the bottom face of the chassis.

According to the construction of aspect 1, a single MPEG board can process digital video/audio signals of both the DVD unit and HDD unit. Furthermore, by making the plane of the MPEG IC mounted on this MPEG board contact the bottom face of the chassis of the recording and reproducing device, it is possible to radiate heat produced in the MPEG IC over the bottom face of the chassis having a surface area wider than the plane of the MPEG IC and release the heat from the bottom face of this chassis having a wide surface area into the atmosphere.

The recording and reproducing device according to a second aspect is the recording and reproducing device according to aspect 1, further comprising a heat sink provided on the bottom face of the chassis having a contacting surface which contacts the bottom face of the chassis, wherein the plane of the MPEG IC is contacted with the plane of the heat sink so as to radiate heat generated in the MPEG IC over the bottom face of the chassis through the heat sink.

According to the construction of aspect 2, heat generated in the MPEG IC is radiated over the bottom face of the chassis having a surface area wider than the plane of the MPEG IC through this heat sink

The recording and reproducing device according to a third aspect is the recording and reproducing device according to aspect 1 or 2, further comprising a cooling fan at the back of the recording and reproducing device which cools the recording and reproducing device so as to cool heat generated in the MPEG IC radiated over the bottom face of the chassis by the cooling fan.

According to the construction of aspect 3, heat generated in the MPEG IC radiated over the bottom face of the chassis having a surface area wider than the plane of the MPEG IC is cooled by blowing a cooling wind from the cooling fan placed at the back of the recording and reproducing device or releasing the heat to the outside.

The recording and reproducing device according to a fourth aspect is the recording and reproducing device according to aspect 3, further comprising a VCR unit inside the recording and reproducing device, wherein the VCR unit and the DVD unit are arranged at the front inside the recording and reproducing device and the DVD unit and the HDD unit are arranged at a certain distance from the cooling fan placed at the back of the recording and reproducing device.

According to the construction of aspect 4, the DVD unit and HDD unit are arranged at a certain distance from the cooling fan placed at the back of the recording and reproducing device, which reduces the cooing wind from the cooling fan against the DVD unit and HDD unit to a moderate level.

The recording and reproducing device according to a fifth aspect is the recording and reproducing device according to aspect 3, further comprising a VCR unit inside the recording and reproducing device, wherein the VCR unit and the DVD unit are arranged at the front inside the recording and reproducing device, the DVD unit and the HDD unit are arranged adjacent to the cooling fan placed at the back of the recording and reproducing device at a height different from that of the cooling fan.

According to the construction of aspect 5, the DVD unit and the HDD unit are arranged adjacent to the cooling fan placed at the back of the recording and reproducing device at a height different from that of the cooling fan, which reduces the cooing wind from the cooling fan against the DVD unit and HDD unit arranged adjacent thereto to a moderate level.

The recording and reproducing device according to a sixth aspect is the recording and reproducing device according to any one of aspects 1 to 5, further comprising a CPU on the MPEG board, wherein the CPU controls operations of the DVD unit and the HDD unit.

According to the construction of aspect 6, the CPU is mounted on the MPEG board and operations of both the DVD unit and the HDD unit are controlled by this MPEG board.

The recording and reproducing device according to a seventh aspect is the recording and reproducing device according to any one of aspects 1 to 5, wherein the MPEG IC comprises a CPU circuit, the MPEG IC processes digital video/audio signals of the DVD unit and the HDD unit and controls operations of the DVD unit and the HDD unit.

According to the construction of aspect 7, the MPEG IC is provided with a CPU circuit, and the MPEG IC processes digital video/audio signals of the DVD unit and the HDD unit and controls operations of the DVD unit and the HDD unit.

### BRIEF DESCRIPTION OF THE DRAWINGS

FIG. 1 is a perspective view illustrating an overview of a recording and reproducing device provided with a DVD unit, HDD unit and a VCR unit according to Embodiment 1 of the present invention.
FIG. 2 is a perspective view illustrating an MPEG board mounted with an MPEG IC according to Embodiment 1 of the present invention mounted on a shielded case.
FIG. 3 is a section view showing the plane of the MPEG IC contacting the contacting surface of the chassis according to Embodiment 1 of the present invention.
FIG. 4 is a plan view illustrating the inner layout of the recording and reproducing device according to Embodiment 1 of the present invention.
FIG. 5 is a front view illustrating the inner layout of the recording and reproducing device according to Embodiment 1 of the present invention.
FIG. 6 is a side view illustrating the inner layout of the recording and reproducing device according to Embodiment 1 of the present invention.
FIG. 7 is a perspective view illustrating a heat sink provided on a bottom surface of a chassis according to Embodiment 2 of the present invention.
FIG. 8 is a plan view illustrating the inner layout of the recording and reproducing device according to Embodiment 2 of the present invention.
FIG. 9 is a front view illustrating the inner layout of the recording and reproducing device according to Embodiment 2 of the present invention.
FIG. 10 is a side view illustrating the inner layout of the recording and reproducing device according to Embodiment 2 of the present invention.
FIG. 11 is a rear section view illustrating the inner layout of the recording and reproducing device according to Embodiment 2 of the present invention.
FIG. 12 is a plan view illustrating the inner layout of a recording and reproducing device according to Embodiment 3 of the present invention.
FIG. 13 is a front view illustrating the inner layout of the recording and reproducing device according to Embodiment 3 of the present invention.
FIG. 14 is a side view illustrating the inner layout of the recording and reproducing device according to Embodiment 3 of the present invention.

### DETAILED DESCRIPTION OF THE PREFERRED EMBODIMENTS

As described above, the present invention relates to a recording and reproducing device provided with a DVD unit, an HDD unit and a VCR unit capable of efficiently radiating heat generated in an MPEG IC mounted on an MPEG board which compresses/decompresses digital video/audio signals of the DVD unit and the HDD unit and in explanations of the following embodiments, Embodiment 1 shows a construction whereby heat is radiated with the plane of the MPEG IC contacting the bottom face of the chassis in a layout with the VCR unit placed on the front left side of the device, the DVD unit on the right side, the MPEG board under the DVD unit and the HDD unit and a power board placed overlapping each other behind the DVD unit, Embodiment 2 shows a construction whereby heat is radiated with the plane of MPEG IC contacting the plane of a heat sink provided on the bottom face of the chassis in a layout with the VCR unit placed on the front left side of the device, the HDD unit behind the VCR unit, the DVD unit on the right side, the MPEG board below the DVD unit and the power board placed behind the DVD unit, and Embodiment 3 shows a construction whereby heat is radiated with the heat sink contacting the MPEG IC as in the case of Embodiment 2 in a layout with the VCR unit placed on the front left side of the device, the DVD unit on the right side, the HDD unit below the DVD unit and the MPEG board and the power board placed overlapping each other behind the HDD unit. Details of these embodiments will be explained below.

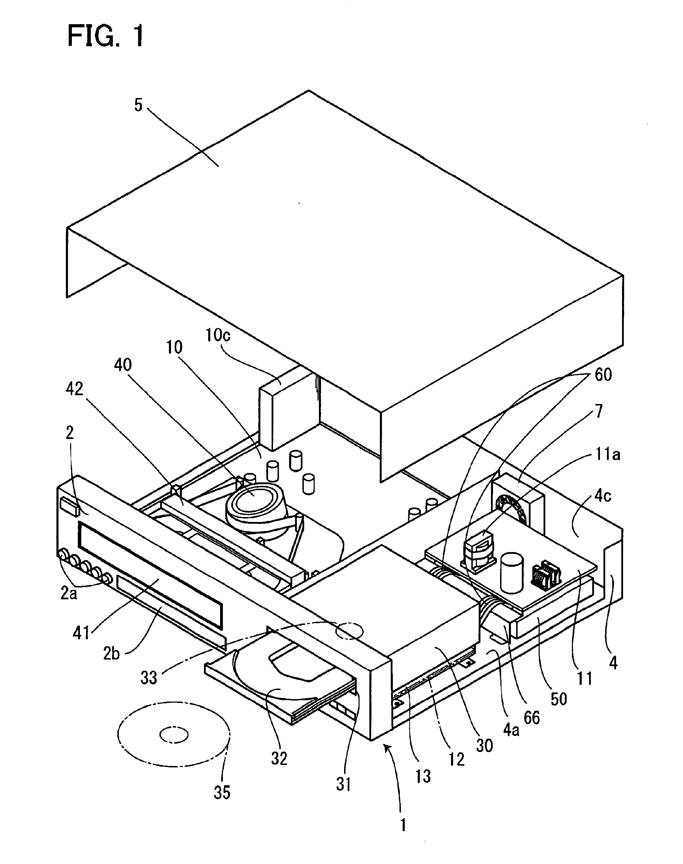

As the best mode for implementing the present invention, embodiments will be explained using FIG. 1 to FIG. 14 below. It goes without saying that the present invention is easily applicable to cases other than those explained in the embodiments within a range not departing from the essence of the present invention.

### [Embodiment 1]

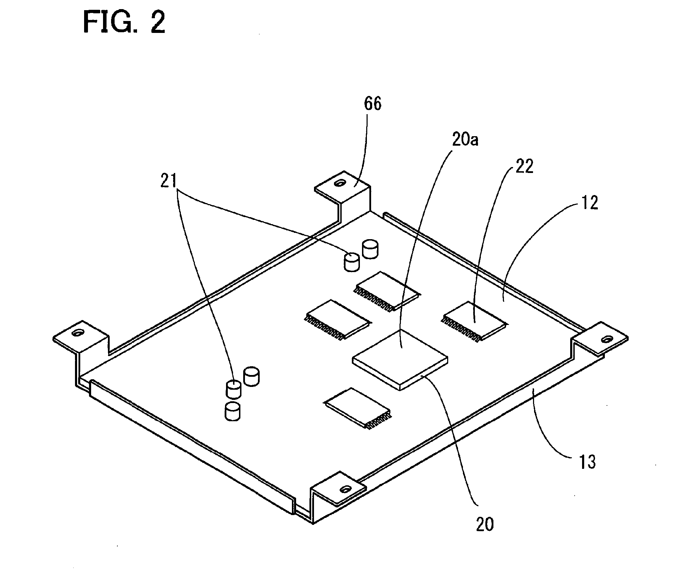

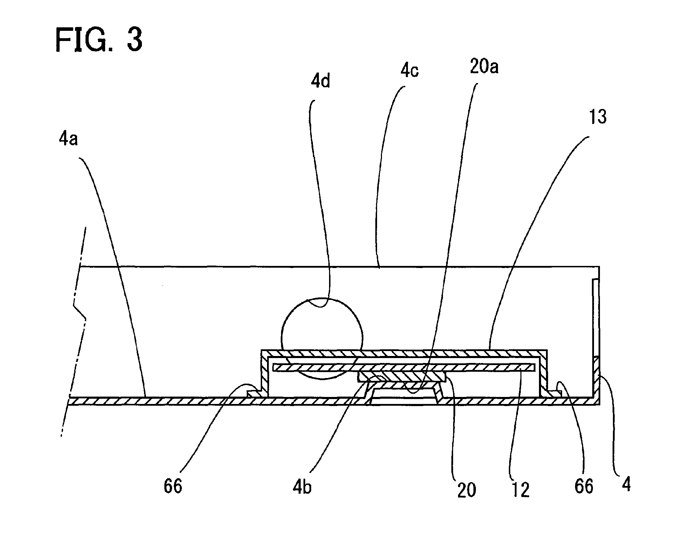

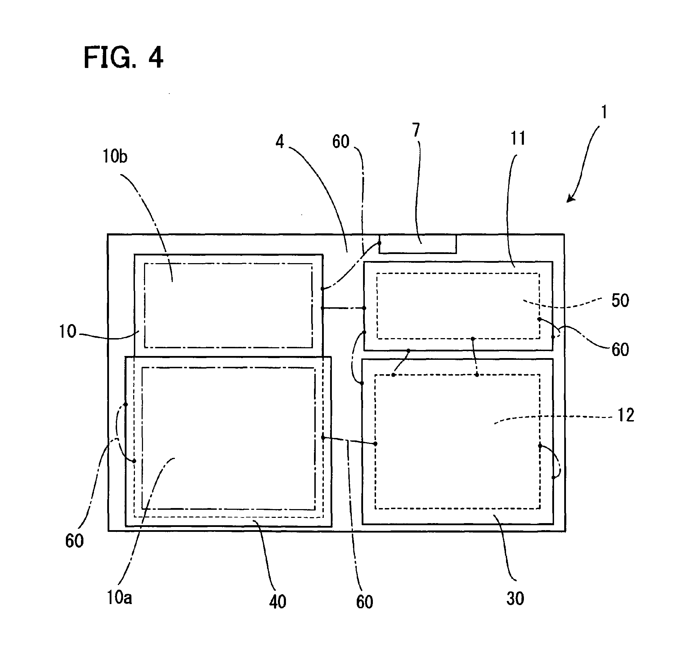

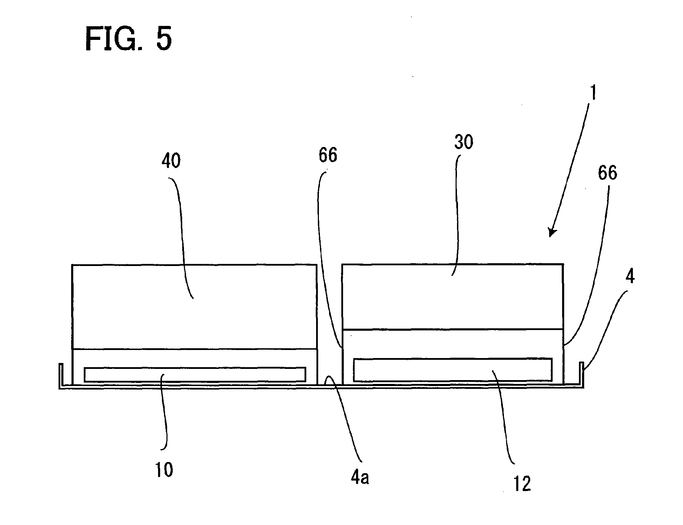

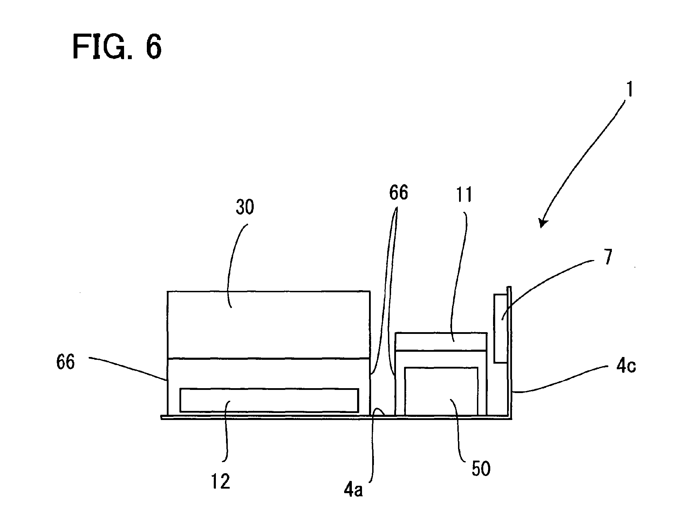

In this embodiment, FIG. 1 is a perspective view showing an overview of a recording and reproducing device provided with a DVD unit, an HDD unit and a VCR unit and FIG. 2 is a perspective view showing an MPEG board mounted with an MPEG IC attached to a shielded case. FIG. 3 is a section view showing the plane of the MPEG IC contacting the contacting surface of the chassis and FIG. 4 is a plan view showing the inner layout of this recording and reproducing device. FIG. 5 is a front view showing the inner layout of the recording and reproducing device shown in FIG. 4 and FIG. 6 is a side view showing the inner layout of the recording and reproducing device shown in FIG. 4.

An overview of the recording and reproducing device provided with a DVD unit, an HDD unit and a VCR unit will be explained using FIG. 1. A front cabinet 2 of this recording and reproducing device 1 is provided with a loading/ejection slot 41 of a VCR cassette 42 on the left side and a loading/ejection slot 31 of a DVD disk 35 on the right side, and operation buttons 2a for the user to give instructions to the recording and reproducing device 1 and a display section 2b which displays information on instruction contents, channel and time are placed below these loading/ejection slots 41, 31. The part behind the front cabinet 2 is constructed of a chassis 4 and a cover 5 which covers this chassis 4 from above and the VCR cassette 42 is loaded in a VCR unit 40 placed on the front left side inside this recording and reproducing device 1. A main board 10 is placed from below this VCR unit 40 backward and a tuner 10c which selects one from broadcast radio waves received by an antenna (not shown) is mounted at the back left side of the main board 10. Furthermore, this main board 10 is mounted with a main microcontroller (not shown) which controls the overall operation of the recording and reproducing device 1 based on an instruction signal from the user received from a remote controller (not shown).

Furthermore, a tray 32 which carries the DVD disk 35 into a DVD unit 30 is shown drawn out at the front right, ready to load the DVD disk 35. When this DVD disk 35 is loaded, the above described tray 32 carries it into the DVD unit 30 and the DVD disk 35 is turned while being held by a clamper 33 and a turntable (not shown) placed thereunder and data is recorded/reproduced on/from the DVD disk 35 by an optical pickup (not shown). An MPEG board 12, an upper part of which is covered with a shielded case 13 is placed under this DVD unit 30 in such a way that the plane of an MPEG IC (not shown) mounted thereon contacts a contacting surface (not shown) of a bottom face 4a of the chassis 4 and an HDD unit 50 is placed therebehind. A power board 11 which supplies power to each of the circuit boards 10, 12 and each of the units 30, 40, 50 or the like is placed on this HDD unit 50 supported by legs 66 and this power board 11 is mounted with electronic parts such as a power transformer 11a. Furthermore, an upright wall 4c which extends upright from the back of the above described chassis 4 is formed in the chassis 4 and a cooling fan 7 which cools heat generated inside this recording and reproducing device 1 is placed here. These circuit boards 10, 11, 12 and units 30, 40, 50 are connected by connecting wires 60.

Next, the MPEG board 12 will be explained using FIG. 2. This MPEG board 12 is mounted with one CPU (Central Processing Unit) 22 which controls the DVD unit 30 and HDD unit shown in FIG. 1 50 and the above described DVD unit 30 and HDD unit 50 are controlled using the one CPU 22 mounted on this MPEG board 12 as a sub microcontroller under the control of the main microcontroller mounted on the main board 10 to perform operations such as recording and reproduction. The MPEG board 12 is further mounted with an MPEG IC 20 which compresses/decompresses digital video/audio signals such as a motion picture and a voice to be recorded/reproduced on/from the DVD disk 35 shown in FIG. 1 and an HDD disk (not shown) and the back thereof is covered with the substantially box-like shielded case 13 having the legs 66 to prevent unnecessary radiation by a high-frequency digital signal produced when recorded/reproduced on/from the DVD disk 35 and the HDD disk. Furthermore, this MPEG board 12 using a double-side mounting board member is provided with electronic parts 21 higher than this MPEG IC 20 which have terminals and which are mounted on the same side as that of the MPEG IC 20 and soldered on the back of the MPEG board 12 with their terminals inserted into terminal holes (not shown) formed in this MPEG board 12. In this way, the length of the legs 66 of the shielded case 13 is set to such a height that when the MPEG board 12 is placed on the bottom face 4a of the chassis 4, these electronic parts 21 do not touch the bottom face 4a. Furthermore, when the DVD unit 30 of the above-mentioned recording and reproducing device 1 or HDD unit 50 performs recording/reproduction, this MPEG IC 20 which compresses/decompresses video/audio signals generates heat, and therefore in order to radiate this heat, the plane 20a of the above MPEG IC 20 is contacted with a contacting surface 4b of the bottom face 4a of the chassis 4 which will be described later using FIG. 3 and heat is thereby radiated. The CPU 22 mounted on the above described MPEG board 12 is not limited to the CPU 22 provided with the sub microcontroller function mounted on the MPEG board 12, but it is also possible to combine the CPU 22 and the MPEG IC 20 as a single piece, mount the MPEG IC 20 including the CPU 22 circuit and the MPEG IC 20 circuit on the MPEG board 12 to process digital video/audio signals of the above described DVD unit 30 and HDD unit 50 and control recording/reproducing operations of the DVD unit 30 and the HDD unit 50.

Next, the method of radiating heat generated in the MPEG IC 20 mounted on the MPEG board 12 will be explained. The chassis 4 shown in FIG. 3 is placed with a plane 20a of the MPEG IC 20 mounted on the MPEG board 12 placed face down on its bottom face 4a and fixed by the legs 66 of the shielded case 13 supporting this. The plane 20a of the MPEG IC 20 mounted on this MPEG board 12 is supported by the legs 66 of the shielded case 13 which are set to be long enough to prevent the high-profile electronic parts 21 mounted on the same side as that of the MPEG IC 20 as described above from touching the bottom face 4a of the chassis 4 and a certain gap is produced between the plane 20a of the MPEG IC 20 and the bottom face 4a of the chassis 4, a contacting surface 4b which forms a stepped salient corresponding to the gap is provided on the bottom face 4a of the chassis 4 facing this MPEG IC 20 and the plane 20a of the IC 20 is contacted with this contacting surface 4b, and heat generated in the MPEG IC 20 is thereby radiated over the bottom face 4a of the chassis 4 through the contacting surface 4b of the chassis 4. Furthermore, the cooling fan 7 shown in FIG. 1 is disposed in an opening 4d formed in the upright wall 4c which stands upright at the back of the chassis 4 and the bottom face 4a of the chassis 4 is cooled with a cooling wind from this cooling fan 7, which can prevent heat from being accumulated in this MPEG IC 20 producing a high temperature.

According to above described FIG. 2 and FIG. 3, the electronic part 21 which is higher than the MPEG IC 20 is mounted on the same side as that of the MPEG IC 20 mounted on the MPEG board 12, the length of the legs 66 of the shielded case 13 is extended so that the high-profile electronic parts 21 do not touch the bottom face 4a of the chassis 4, a gap is thereby produced between the plane 20a of the MPEG IC 20 and the bottom face 4a of the chassis 4, a stepped salient is formed on the bottom face 4a of the chassis 4 so that the plane 20a of the MPEG IC 20 contacts this contacting surface 4b, but this MPEG board 12 uses a double-side mounting board member and if the high-profile electronic parts 21 are mounted on the back of the mounting surface of the MPEG IC 20, it is possible to make the plane 20a of the MPEG IC 20 contact the flat surface of the bottom face 4a of the chassis 4, eliminating the need for forming the stepped salient on the bottom face 4a of the chassis 4.

Next, the layout inside the recording and reproducing device 1 will be explained using FIGS. 4 to 6. Here, the main board 10 and the power board 11 shown in FIG. 5 and FIG. 6 are schematically shown when electronic parts (not shown) are mounted thereon, while the MPEG board 12 is shown when an electronic part (not shown) is mounted and a shielded case (not shown) is then attached thereto and the MPEG board 12 is shown with the thickness of the electronic part and shielded case taken into consideration. The chassis 4 of this recording and reproducing device 1 is provided with the VCR unit 40 at the front left and the main board 10 extending backward from beneath this VCR unit 40. On this main board 10, an operation section provided with a remote controller light receiving section (not shown) and operation buttons, and a VCR circuit 10a which controls the operation of the VCR unit 40 which records/reproduces data on/from the VCR cassette 42 shown with FIG. 1 are formed below the VCR unit 40 and a video/audio processing circuit 10b made up of a tuner circuit section (not shown), a video/audio circuit section, an external input/output circuit section and the main microcontroller which controls the operation of this recording and reproducing device 1 in a centralized manner is formed behind the VCR circuit 10a. This main microcontroller may also be formed in the VCR circuit 10a to control the operation of the recording and reproducing device 1 in a centralized manner.

Furthermore, the DVD unit 30 supported by the legs 66 is placed at a certain distance from the cooling fan 7 placed on the upright wall 4c at the back of the chassis 4 and the MPEG board 12 is placed under the DVD unit 30 so as to contact the bottom face 4a of the chassis 4. Furthermore, the HDD unit 50 is placed at a position lower than the cooling fan 7 behind this MPEG board 12 and the power board 11 which supplies power to the circuit boards 10, 12 and the units 30, 40, 50 is supported on the HDD unit 50 by the legs 66. In this way, though the HDD unit 50 shown in FIG. 6 is placed in front of the cooling fan 7, it is placed at a position lower than the cooling fan 7, the cooling wind against the HDD unit 50 is reduced to a moderate level. This can reduce dust carried by the cooling wind entering the HDD unit 50. Furthermore, since the DVD unit 30 is also placed on the front cabinet 2 side, it is located at a certain distance from the cooling fan 7 placed on the upright wall 4c at the back of the chassis 4 and the cooling wind is likewise reduced to a moderate level, making it possible to improve the dustproof effects of the HDD unit 50 and DVD unit 30 and cool the HDD unit 50 and DVD unit 30 moderately with a moderately reduced cooling wind.

Next, the order in which the respective circuit boards and respective units are attached and the procedure for wiring the connection wires 60 for connecting these elements will be explained using FIG. 1, FIG. 4. The cooling fan 7 is set in the opening 4d of the upright wall 4c of the chassis 4 beforehand. Furthermore, the main board 10 is mounted on the left side of the bottom face 4a of the chassis 4, the VCR unit 40 is mounted thereon and the main board 10 and cooling fan 7, and the main board 10 and VCR unit 40 are connected by the connection wires 60. Furthermore, the MPEG board 12 to which the shielded case 13 is attached is mounted on the bottom face 4a of the chassis 4 at the front right and the HDD unit 50 is mounted on the bottom face 4a of the chassis 4 therebehind. Here, the connection wires 60 are connected from the MPEG board 12 to the main board 10 and the connection wires 60 are connected from the MPEG board 12 to the HDD unit 50. Next, the power board 11 supported by the legs 66. is mounted on the HDD unit 50 and the connection wires 60 are connected from the MPEG board 12 to the power board 11. Furthermore, the connection wires 60 are connected from the power board 11 to the main board 10. Next, the power board 11 and the HDD unit 50 are connected by the connection wires 60. Next, the DVD unit 30 supported by the legs 66 is mounted above the MPEG board 12 and the connection wires 60 are connected from the MPEG board 12 to the DVD unit 30. Next, the DVD unit 30 and the power board 11 are connected by the connection wires 60. Using these procedures, the boards 10, 11, 12 and units 30, 40, 50 within the recording and reproducing device 1 can be assembled by assembling them one atop another from the bottom face 4a of the chassis 4 upward, which facilitates the assembly work. Furthermore, by connecting the connection wires 60 from the MPEG board 12 to the main board 10, power board 11 and HDD unit 50 before mounting the DVD unit 30, it is possible to prevent the DVD unit 30 placed above the MPEG board 12 from obstructing the wiring work and simplify and facilitate the wiring work.

According to above described Embodiment 1, this recording and reproducing device 1 allows the single MPEG board 12 to process both digital video/audio signals of the DVD unit 30 and the HDD unit 50 and thereby eliminate the need for placing a plurality of separate MPEG boards 12 for the DVD unit 30 and HDD unit 50 or the like. Furthermore, by making the plane 20a of the MPEG IC 20 mounted on this MPEG board 12 contact the bottom face 4a of the chassis 4 of the recording and reproducing device 1, it is possible to radiate heat generated in the MPEG IC 20 to the bottom face 4a of the chassis 4 having a greater surface area than that of the plane 20a of the MPEG IC 20 and efficiently release the heat from the bottom face 4a of this wide chassis 4 into the atmosphere.

This eliminates the need for separate members such as an expensive and relatively large radiator having a plurality of radiating fins as in the case of the conventional example, the need for a large space due to the use of this radiator and can reduce the size and thickness of the recording and reproducing device 1. Furthermore, since heat is radiated with the plane 20a of the MPEG IC 20 directly contacting the bottom face 4a of the chassis 4, there is no need for the accuracy of relative positions and engagement dimensions of the protrusions, holes and radiating spacer as in the case of Patent Document 1 and there is no need for complicated control over relative positions and engagement dimensions. Furthermore, by forming a stepped salient on the bottom face 4a of the chassis 4 for contact, it is possible to place the MPEG IC 20 at a position higher than this bottom face 4a of the chassis 4 and contact it, prevent other electronic parts mounted on the circuit board from becoming obstacles as in the case of Patent Document 1 and make the device also applicable to the specifications whereby the electronic parts are mounted on both sides of the circuit board or the electronic part is mounted with its terminals inserted into terminal holes formed in the circuit board. Furthermore, by efficiently radiating heat generated in the MPEG IC 20 in this way, it is possible to prevent malfunction caused by a high temperature due to the accumulated heat of the MPEG IC 20, extend the life of the part of this MPEG IC 20 and improve the long-term reliability of the recording and reproducing device 1 mounted with the MPEG board 12 provided with this MPEG IC 20.

The cooling fan 7 which cools the recording and reproducing device 1 is provided at the back of the recording and reproducing device 1 and it is possible to cool heat generated in the MPEG IC 20 radiated over the bottom face 4a of the chassis 4 which has a wider surface area than that of the plane 20a of the MPEG IC 20 by blowing a cooling wind from the cooling fan 7 thereover or releasing the heat to the outside and thereby efficiently cool the heat generated in the MPEG IC 20 even in the narrow device 1. Furthermore, when heat is radiated through a heat sink 6 over the bottom face 4a of the chassis 4, it is possible to efficiently cool the heat radiated over the bottom face 4a of the chassis 4 and also cool the heat sink 6 which contacts the plane 20a of the MPEG IC 20 with a cooling wind and thereby improve the cooling efficiency.

Furthermore, placing the DVD unit 30 at a certain distance from the cooling fan 7 provided at the back of the recording and reproducing device 1 can reduce the cooling wind from the cooling fan 7 to the DVD unit 30 to a moderate level. Furthermore, placing the HDD unit 50 adjacent to the cooling fan 7 provided at the back of the recording and reproducing device 1 at a height different from the height of the cooling fan 7 can reduce the cooling wind from the cooling fan 7 to this HDD unit 50 to a moderate level, and thereby prevent the cooling wind from directly blowing over the DVD unit 30 and the HDD unit 50 which must be protected from dust, obtain appropriate cooling efficiency with a moderately reduced cooling wind, reduce dust carried by the cooling wind and entering the device and thereby improve the dustproof effect.

Furthermore, the one CPU 22 mounted on the MPEG board 12 which processes both digital video/audio signals of the DVD unit 30 and HDD unit 50 can control both operations of the DVD unit 30 and HDD unit 50, and thereby eliminate the need for providing separate control circuit boards for operation control of both the DVD unit 30 and HDD unit 50 or for operation control of the DVD unit 30 and for operation control of the HDD unit 50 or the like in addition to this MPEG board 12, reduce the load of wiring work of connecting these control circuit boards and reduce the size of the recording and reproducing device 1 because there is no need for storage of these control circuit boards.

### [The embodiment 2]

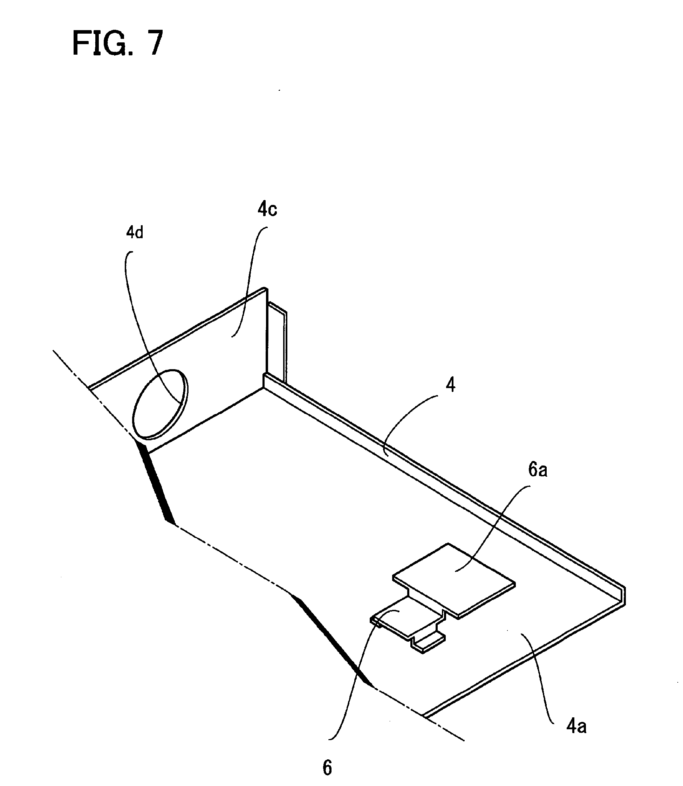

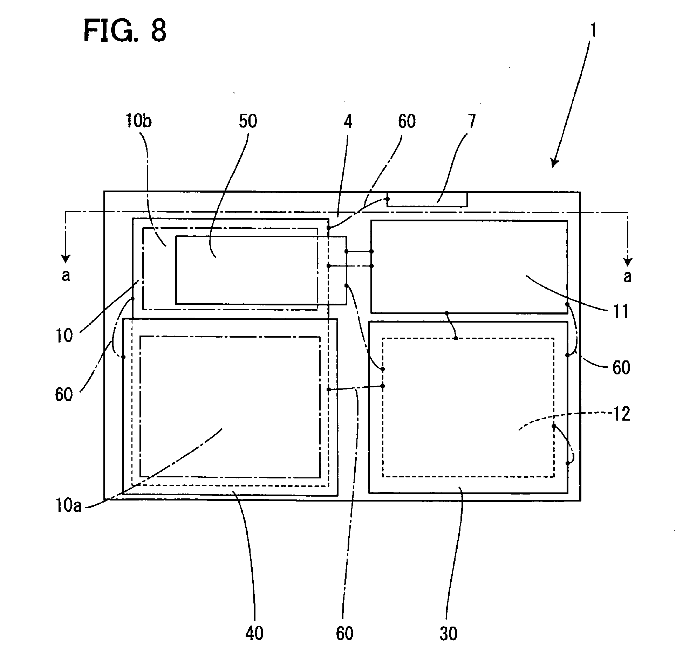

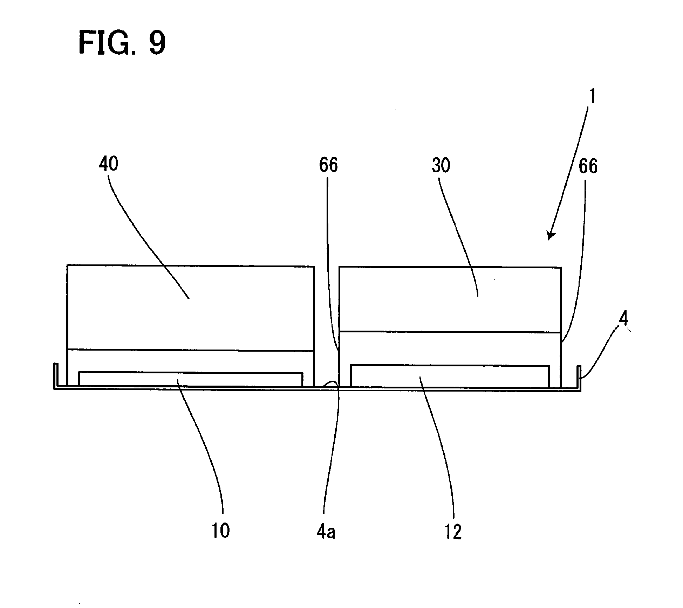

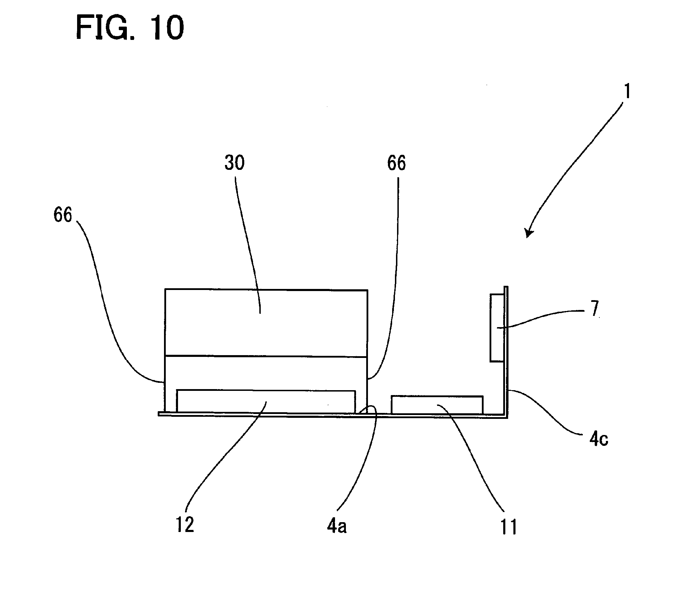

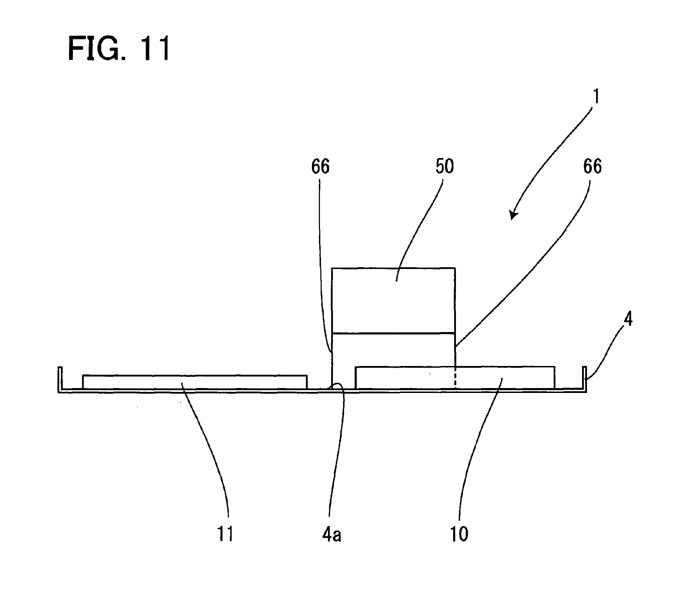

Next, Embodiment 2 of the present invention will be explained. The same components as those in Embodiment 1 are assigned the same reference numerals and detailed explanations thereof will be omitted. In Embodiment 2, FIG. 7 is a perspective view showing a heat sink provided on a bottom face of a chassis and FIG. 8 is a plan view showing the inner layout of this recording and reproducing device. FIG. 9 is a front view showing the inner layout of the recording and reproducing device shown in FIG. 8 and FIG. 10 is a side view showing the inner layout of the recording and reproducing device shown in FIG. 8. Furthermore, FIG. 11 is a rear section view showing the inner layout of the recording and reproducing device shown in FIG. 8.

Reference numeral 6 shown in FIG. 7 denotes a heat sink, which is placed on a bottom face 4a of a chassis 4 independently of the chassis 4 and a plane 6a of this heat sink 6 has a higher step than that of the bottom face 4a of the chassis 4. The chassis 4 is provided with the MPEG board 12 shown in FIG. 2 with the shielded case 13 attached thereto and the heat sink 6 is placed at a position opposite to the MPEG IC 20 mounted on this MPEG board 12. This causes a plane 20a of the MPEG IC 20 to contact the plane 6a of the heat sink 6 including the step height and allows heat generated in the MPEG IC 20 to be radiated over the chassis 4 through the heat sink 6. Furthermore, since the step height of this heat sink 6 is formed from the bottom face 4a of the chassis 4, a cooling wind of a cooling fan (not shown) placed at an opening 4d of an upright wall 4c which stands upright at the back of the chassis 4 is also blown onto the back of the plane 6a which contacts the plane 20a of the MPEG IC 20 or released to the outside, and therefore heat generated in the MPEG IC 20 is radiated over the bottom face 4a of the chassis 4 through the heat sink 6 and the heat sink 6 and the bottom face 4a of the chassis 4 are directly cooled with the cooling wind, and therefore a wider area is cooled with the cooling wind and the cooling efficiency can be improved.

Next, the layout inside the recording and reproducing device 1 will be explained using FIGS. 8 to 11. The chassis 4 is provided with a cooling fan 7 on the upright wall 4c at the back right and a main board 10 on which a VCR circuit 10a and video/audio processing circuit 10b are formed on the left side and a VCR unit 40 on the front side above the main board 10. Furthermore, an HDD unit 50 is placed behind the VCR unit 40 supported by legs 66 at a certain distance from the cooling fan 7. An MPEG board 12 is placed on the right side of the chassis 4 in such a way that the plane of the heat sink (not shown) placed on the bottom face 4a of the chassis 4 contacts the plane of the MPEG IC and a DVD unit 30 supported by legs 66 is placed above the MPEG board 12 at a certain distance from the cooling fan 7. Moreover, a power board 11 is placed behind the MPEG board 12. This reduces the cooling wind from the cooling fan 7 against the DVD unit 30 and HDD unit 50 placed at a certain distance from the cooling fan 7 to a moderate level and can reduce intruding dust carried by the cooling wind. Furthermore, since only the power board 11 is placed on the bottom face 4a of the chassis 4 behind the MPEG board 12 placed under the DVD unit 30, the HDD unit 50 is placed at the position at which this power board 11 is placed, making it possible to reduce the obstruction of the cooling wind from the cooling fan 7 compared to the construction of Embodiment 1 in which the power board 11 is placed thereupon, efficiently cool heat generated in the MPEG IC 20 and moderately cool the DVD unit 30 and HDD unit 50 with a moderately reduced cooling wind.

Furthermore, the order in which the boards 10, 11, 12 and units 30, 40, 50 placed in the recording and reproducing device 1 are attached and the wiring procedure of connection wires 60 connecting these elements will be explained with reference to the layout shown in FIG. 8. As in the case of Embodiment 1, the cooling fan 7 is beforehand set in the opening 4d of the upright wall 4c of the chassis 4 first. Furthermore, the main board 10 is attached on the left side of the bottom face 4a of the chassis 4, the VCR unit 40 is placed thereabove and the main board 10 and cooling fan 7, and the main board 10 and VCR unit 40 are connected using the connection wires 60. Next, the MPEG board 12 is attached on the right side of the bottom face 4a of the chassis 4 and the power board 11 is attached therebehind. Next, the MPEG board 12 is connected to the main board 10 and the MPEG board 12 is connected to the power board 11. Next, the power board 11 and the main board 10 are connected. Next, the DVD unit 30 is attached above the MPEG board 12, the MPEG board 12 and the DVD unit 30 are connected and the power board 11 and DVD unit 30 are connected. Next, the HDD unit 50 is attached above the main board 10, the HDD unit 50 and MPEG board 12 are connected and the HDD unit 50 and power board 11 are connected.

In this way, it is possible to attach the MPEG board 12, connect the MPEG board 12 to the main board 10 and power board 11, then attach the DVD unit 30 above the MPEG board 12 and connect the MPEG board 12 to the DVD unit 30, and thereby prevent the DVD unit 30 from obstructing wiring of these elements and simplify and facilitate the assembly work and wiring work of the recording and reproducing device 1.

According to above described Embodiment 2, by making the plane 20a of the MPEG IC 20 contact the plane 6a of the heat sink 6 provided on the bottom face 4a of the chassis 4, it is possible to efficiently radiate heat generated in the MPEG IC 20 over the bottom face 4a of the chassis 4 which has a wider surface area than the plane 20a of the MPEG IC 20 and thereby release the heat of the MPEG IC 20 from the bottom face 4a of this wide chassis 4 into the atmosphere. Furthermore, even when the electronic part 21 higher than the thickness of the MPEG IC 20 is mounted on the MPEG board 12, it is possible to easily set the distance between the bottom face 4a of the chassis 4 and the MPEG IC 20 and place it at a desired height. Furthermore, since a gap is formed between the heat sink 6 which contacts the plane 20a of the MPEG IC 20 and bottom face 4a of the chassis 4, it is also possible to release heat from the surface of the heat sink 6 into the atmosphere and thereby improve the radiation efficiency.

Furthermore, heat radiated over the bottom face 4a of the chassis 4 through the heat sink 6 can be efficiently cooled by the cooling fan 7 placed at the back of the recording and reproducing device 1, which can efficiently cool the recording and reproducing device 1 and can also cool the heat sink 6 which contacts the plane 20a of the MPEG IC 20 with a cooling wind and thereby improve the cooling efficiency.

Furthermore, the DVD unit 30 and the VCR unit 40 provided with loading/ejection slots 31, 41 for a recording medium such as a DVD disk 35 and VCR cassette 42 are arranged on a front cabinet 2 of the recording and reproducing device 1 at the front inside this recording and reproducing device 1 and the HDD unit 50 is placed on the main board 10, the DVD unit 30 and the HDD unit 50 are arranged at a certain distance from the cooling fan 7, and it is possible to thereby reduce the cooling wind from the cooling fan 7 against the DVD unit 30 and HDD unit 50 to a moderate level. This prevents the cooling wind from directly blowing over the DVD unit 30 and the HDD unit 50 which must be protected from dust, obtain moderate cooling efficiency with a moderately reduced cooling wind, and thereby improve the dustproof effect.

### [The embodiment 3]

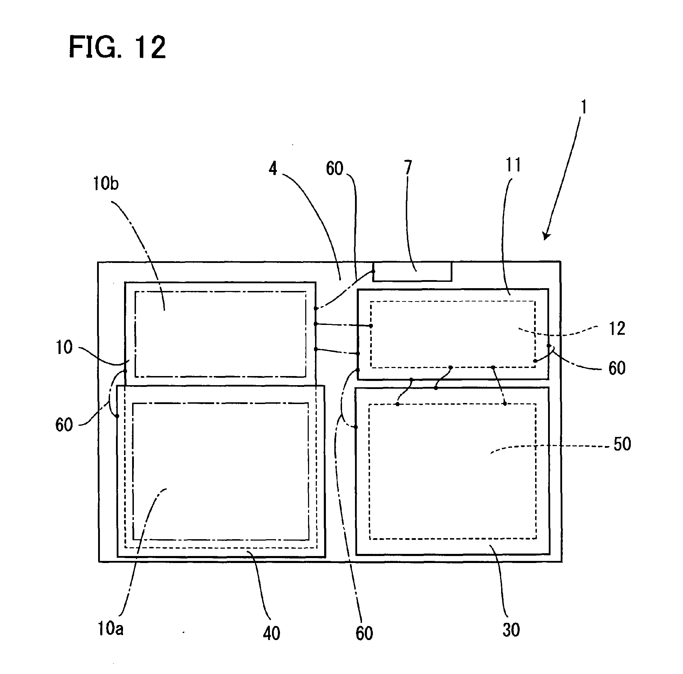

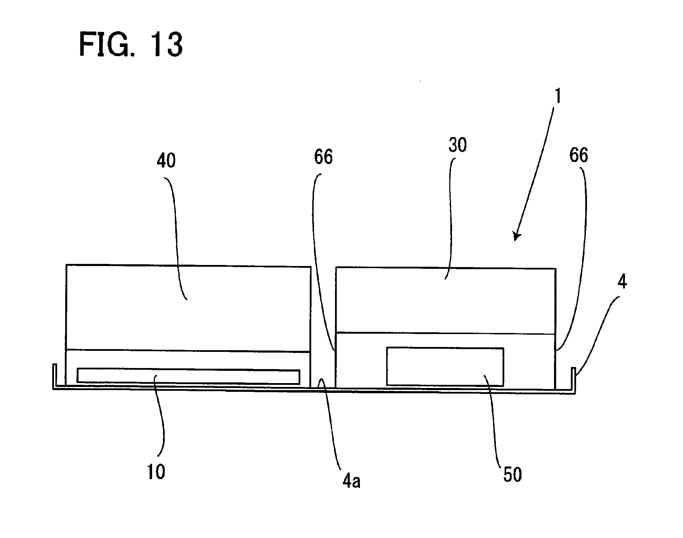

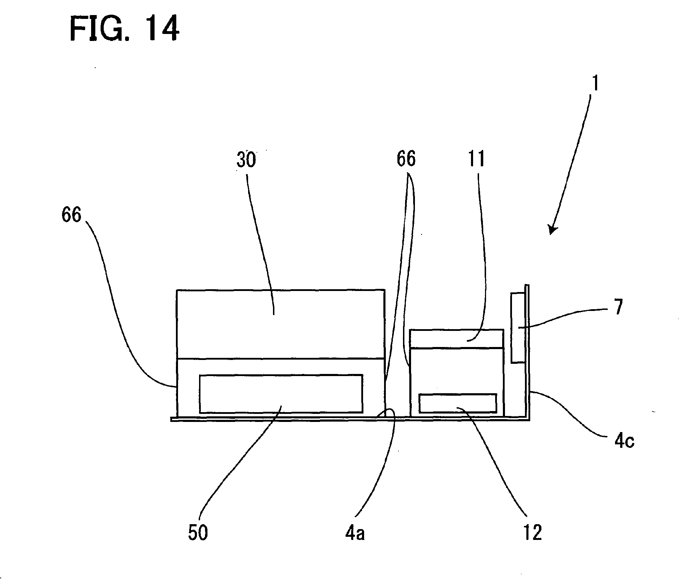

Next, Embodiment 3 of the present invention will be explained. The same components as those in Embodiment 1 are assigned the same reference numerals and detailed explanations thereof will be omitted. In Embodiment 3, FIG. 12 is a plan view showing the inner layout of this recording and reproducing device. FIG. 13 is a front view showing the inner layout of the recording and reproducing device shown in FIG. 12 and FIG. 14 is a side view showing the inner layout of the recording and reproducing device shown in FIG. 12.

As in the case of Embodiment 2, Embodiment 3 adopts a construction in which heat is radiated with a plane 6a of a heat sink 6 placed on a chassis 4 contacting a plane 20a of an MPEG IC 20 and the layout inside a recording and reproducing device 1 will be explained with reference to FIG. 12 to FIG. 14. A cooling fan 7 is placed on an upright wall 4c at the right back of the chassis 4, a main board 10 on which a VCR circuit 10a and video/audio processing circuit 10b are formed is placed on the left side of the chassis 4 and a VCR unit 40 is placed at the front above the main board 10. Furthermore, an HDD unit 50 is placed on the right side of the chassis 4 at a certain distance from the cooling fan 7. A DVD unit 30 supported by legs 66 is likewise placed on this HDD unit 50 at a certain distance from the cooling fan 7. An MPEG board 12 is placed behind the HDD unit 50 in such a way that the plane of the heat sink (not shown) placed on the bottom face 4a of the chassis 4 contacts a plane 20a of the MPEG IC 20 and a power board 11 supported by the legs 66 is placed thereabove. This reduces the cooling wind from the cooling fan 7 against the DVD unit 30 and HDD unit 50 placed at a certain distance from the cooling fan 7 to a moderate level and can reduce dust carried by the cooling wind and can moderately cool the DVD unit 30 and HDD unit 50 with a moderately reduced cooling wind.

Furthermore, the order in which the boards 10, 11, 12 and units 30, 40, 50 placed inside the recording and reproducing device 1 are attached and the wiring procedure of the connection wires 60 connecting these elements will be explained with reference to the layout shown in FIG. 12. As in the case of Embodiment 1 and Embodiment 2, the cooling fan 7 is attached to the opening 4d of the upright wall 4c of the chassis 4 beforehand. Furthermore, the main board 10 is attached on the left side of the bottom face 4a of the chassis 4, the VCR unit 40 is placed thereon and the main board 10 and cooling fan 7, and the main board 10 and VCR unit 40 are connected. Next, the MPEG board 12 and HDD unit 50 are attached to the bottom face 4a of the chassis 4. Next, the MPEG board 12 is connected to the main board 10 and the MPEG board 12 is connected to the HDD unit 50. Next, the power board 11 is attached above the MPEG board 12, the power board 11 and main board 10 are connected and the MPEG board 12 is connected to the power board 11. Next, the power board 11 and HDD unit 50 are connected. Next, the DVD unit 30 is attached above the HDD unit 50 and the MPEG board 12 is connected to the DVD unit 30. Next, the DVD unit 30 and power board 11 are connected.

This makes it possible to attach the MPEG board 12, connect the MPEG board 12 to the main board 10, HDD unit 50, power board 11, then attach the DVD unit 30 and connect the MPEG board 12 to DVD unit 30, which prevents the DVD unit 30 from obstructing wiring of these elements and simplifies and facilitates assembly work and wiring work of the recording and reproducing device 1.

According to above described Embodiment 3, by placing the DVD unit 30 and the VCR unit 40 provided with the loading/ejection slots 31, 41 of a recording medium such as a DVD disk 35 and VCR cassette 42 on the front cabinet 2 of the recording and reproducing device 1 on the front side inside this recording and reproducing device 1 and placing the HDD unit 50 under the DVD unit 30 and thereby placing the DVD unit 30 and HDD unit 50 at a certain distance from the cooling fan 7, it is possible to reduce a cooling wind from the cooling fan 7 against these DVD units 30 and HDD unit 50 to a moderate level. This prevents the cooling wind from directly blowing over the DVD unit 30 and the HDD unit 50 which must be protected from dust, can obtain moderate cooling efficiency with a moderately reduced cooling wind and improve the dustproof effect.

Furthermore, as shown in Embodiment 1, Embodiment 2 and Embodiment 3, by changing the arrangement of the respective units such as the DVD unit 30, HDD unit 50 and VCR unit 40 and respective circuit boards such as the main board 10, power board 11, MPEG board 12, it is possible to increase the degree of freedom in the design of the inner layout of the hybrid machine of the recording and reproducing device 1 made up of the DVD unit 30, HDD unit 50 and VCR unit 40 and the overall recording and reproducing device 1 including the front cabinet 2.

The embodiments have been explained in detail so far, but the present invention can be implemented modified in various ways within a range not departing from the essence of the present invention. For example, the layout inside the recording and reproducing device 1 is not limited to the construction in which the VCR unit 40 is placed on the left side and the DVD unit 30 is placed on the right side, but any mode of construction is possible, for example, reversing these units left to right if it at least allows the loading/ejection slots 41, 31 of the VCR cassette 42 and DVD disk 35 to be arranged at the front of the recording and reproducing device 1. Furthermore, the CPU 22 mounted on the MPEG board 12 is not limited to the CPU 22 provided with a sub microcontroller function mounted on the MPEG board 12, but it is also possible to unite the CPU 22 and MPEG IC 20, mount the MPEG IC 20 provided with the CPU 22 circuit and the MPEG IC 20 circuit on the MPEG board 12 to process digital video/audio signals of the DVD unit 30 and HDD unit 50 and control the recording/reproducing operations of the DVD unit 30 and HDD unit 50. Furthermore, the contacting surface 4b formed on the bottom face 4a of the chassis 4 is not limited to the mode in which a stepped salient is formed so as to contact the contacting surface 4b, and it is possible to select any appropriate method, for example, placing an electronic part which is higher than the MPEG IC 20 on the back of the MPEG board 12 which allows double-side mounting and thereby causing the plane 20a of the MPEG IC 20 to contact the flat surface of the bottom face 4a of the chassis 4 to radiate heat or change the height of the contacting surface 4b if it is at least possible to efficiently radiate heat.

The effects of the present invention are as follows.

According to the invention of a first aspect, a single MPEG board can process digital video/audio signals of both the DVD unit and HDD unit, which eliminates the need for providing a plurality of separate MPEG boards for the DVD unit and HDD unit or the like. Furthermore, by making the plane of the MPEG IC mounted on this MPEG board contact the bottom face of the chassis of the recording and reproducing device, it is possible to radiate heat produced in the MPEG IC over the bottom face of the chassis having a surface area wider than the plane of the MPEG IC and efficiently release the heat from the wide bottom face of this chassis into the atmosphere. This eliminates the need for separate members such as an expensive and relatively large radiator having a plurality of radiating fins as in the case of the conventional example, the need for a large space due to the use of this radiator and can reduce the size and thickness of the recording and reproducing device. Furthermore, since heat is radiated with the plane of the MPEG IC directly contacting the bottom face of the chassis, there is no need for the accuracy of relative positions and engagement dimensions of the protrusions, holes and radiating spacer as in the case of Patent Document 1 and there is no need for complicated control over relative positions and engagement dimensions. Furthermore, by forming a stepped salient on the bottom face of the chassis for contact, it is possible to place the MPEG IC at a position higher than this bottom face of the chassis and contact it, prevent other electronic parts mounted on the circuit board from becoming obstacles as in the case of Patent Document 1 and make the device also applicable to the specifications whereby the electronic parts are mounted on both sides of the circuit board or the electronic part is mounted with its terminals inserted into terminal holes formed in the circuit board. Furthermore, by efficiently radiating heat generated in the MPEG IC in this way, it is possible to prevent malfunction caused by a high temperature due to the accumulated heat of the MPEG IC, extend the life of the part of this MPEG IC and improve the long-term reliability of the recording and reproducing device mounted with the MPEG board provided with this MPEG IC.

According to the invention of a second aspect, heat generated in the MPEG IC is radiated over the bottom face of the chassis having a surface area wider than the plane of the MPEG IC through this heat sink by making the plane of the MPEG IC contact the plane of the heat sink provided on the bottom face of the chassis, and it is possible to thereby release the heat generated in the MPEG IC from this wide bottom face of the chassis into the atmosphere. Furthermore, even when an electronic part higher than the thickness of the MPEG IC is mounted on the MPEG board, it is possible to easily set the distance between the bottom face of the chassis and the MPEG IC and place it at a desired height. Furthermore, since a gap is formed between the heat sink which contacts the plane of the MPEG IC and the bottom face of the chassis, it is also possible to release heat from the surface of the heat sink into the atmosphere and thereby improve the radiation efficiency.

According to the invention of a third aspect, heat generated in the MPEG IC radiated over the bottom face of the chassis having a surface area wider than the plane of the MPEG IC is cooled by blowing a cooling wind from the cooling fan or releasing the heat to the outside, and therefore it is possible to efficiently cool heat generated in the MPEG IC even in a narrow device. Furthermore, when heat is radiated through a heat sink over the bottom face of the chassis, it is possible to efficiently cool the heat radiated over the bottom face of the chassis and also cool the heat sink which contacts the plane of the MPEG IC with a cooling wind and thereby improve the cooling efficiency.

According to the invention of a fourth aspect, the DVD unit and HDD unit are arranged at a certain distance from the cooling fan placed at the back of the recording and reproducing device, which reduces the cooing wind from the cooling fan against the DVD unit and the HDD unit to a moderate level. This can prevent the cooling wind from directly blowing over the DVD unit and the HDD unit which must be protected from dust, obtain appropriate cooling efficiency with a moderately reduced cooling wind, reduce dust carried by the cooling wind and entering the device and thereby improve the dustproof effect.

According to the invention of a fifth aspect, the DVD unit and the HDD unit are arranged adjacent to the cooling fan placed at the back of the recording and reproducing device at a height different from that of the cooling fan, which reduces the cooing wind from the cooling fan against the DVD unit and HDD unit to a moderate level, and can thereby obtain an appropriate cooling effect even when the HDD unit which must be protected from dust is placed adjacent to the cooling fan, reduce dust carried by the cooling wind and entering the device and thereby improve the dustproof effect.

According to the invention of a sixth aspect, the CPU mounted on the MPEG board which processes digital video/audio signals of both the DVD unit and the HDD unit can control operations of the DVD unit and the HDD unit, and thereby eliminate the need for providing separate control circuit boards for operation control of both the DVD unit and HDD unit or for operation control of the DVD unit and for operation control of the HDD unit or the like in addition to this MPEG board, reduce the load of wiring work of connecting these control circuit boards and reduce the size of the recording and reproducing device because there is no need for storage of these control circuit boards.

According to the invention of a seventh aspect, the MPEG IC is provided with a CPU circuit, and the MPEG IC can process digital video/audio signals of the DVD unit and the HDD unit and control operations of the DVD unit and the HDD unit, and therefore there is no need to mount any CPU in addition to this MPEG IC on the MPEG board and it is possible to reduce the load of mounting an additional CPU on this MPEG board.

## Claims

1. A recording and reproducing device comprising:
a main board provided with a DVD unit and an HDD unit, which controls overall operation of the recording and reproducing device which constitutes the DVD unit and HDD unit and processes analog video/audio signals; and
an MPEG board which processes digital video/audio signals of the DVD unit and the HDD unit,
wherein a plane of an MPEG IC mounted on the MPEG board is contacted with a bottom face of a chassis of the recording and reproducing device so as to radiate heat generated in the MPEG IC over the bottom face of the chassis.

2. The recording and reproducing device according to claim 1, further comprising a heat sink provided on the bottom face of the chassis having a contacting surface which contacts the bottom face of the chassis, wherein the plane of the MPEG IC is contacted with the plane of the heat sink so as to radiate heat generated in the MPEG IC over the bottom face of the chassis through the heat sink.

3. The recording and reproducing device according to claim 1 or 2, further comprising a cooling fan at the back of the recording and reproducing device which cools the recording and reproducing device so as to cool heat generated in the MPEG IC radiated over the bottom face of the chassis by the cooling fan.

4. The recording and reproducing device according to claim 3 further comprising a VCR unit inside the recording and reproducing device, wherein the VCR unit and the DVD unit are arranged at the front inside the recording and reproducing device and the DVD unit and the HDD unit are arranged at a certain distance from the cooling fan placed at the back of the recording and reproducing device.

5. The recording and reproducing device according to claim 3, further comprising a VCR unit inside the recording and reproducing device, wherein the VCR unit and the DVD unit are arranged at the front inside the recording and reproducing device, the DVD unit and the HDD unit are arranged adjacent to the cooling fan placed at the back of the recording and reproducing device at a height different from that of the cooling fan.

6. The recording and reproducing device according to any one of claims 1 to 5, further comprising a CPU on the MPEG board, wherein the CPU controls operations of the DVD unit and the HDD unit.

7. The recording and reproducing device according to any one of claims 1 to 5, wherein the MPEG IC comprises a CPU circuit, the MPEG IC processes digital video/audio signals of the DVD unit and the HDD unit and controls operations of the DVD unit and the HDD unit.
